(19)

Europäisches Patentamt

European Patent Office

Office européen des brevets

(11) **EP 4 621 866 A1**

(12) **EUROPEAN PATENT APPLICATION**
published in accordance with Art. 153(4) EPC

(43) Date of publication:
**24.09.2025  Bulletin 2025/39**

(21) Application number: **24769624.8**

(22) Date of filing: **05.01.2024**

(51) International Patent Classification (IPC):
*H01M 4/131* (2010.01)     *H01M 10/04* (2006.01)

(52) Cooperative Patent Classification (CPC):
**H01M 4/131; H01M 4/1315; H01M 4/136;
H01M 10/04; H01M 10/052**

(86) International application number:
**PCT/CN2024/070771**

(87) International publication number:
**WO 2024/187926 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.03.2023  CN 202310237435**

(71) Applicant: **Contemporary Amperex Technology
(Hong Kong) Limited
Hong Kong (HK)**

(72) Inventors:
• **QIN, Yiming
  Ningde, Fujian 352100 (CN)**
• **SUN, Jingxuan
  Ningde, Fujian 352100 (CN)**
• **XU, Xiaofu
  Ningde, Fujian 352100 (CN)**
• **SHANG, Yibo
  Ningde, Fujian 352100 (CN)**
• **PAN, Jianfu
  Ningde, Fujian 352100 (CN)**
• **LIU, Qian
  Ningde, Fujian 352100 (CN)**
• **YE, Yonghuang
  Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE PLATE, BATTERY, AND ELECTRIC APPARATUS**

(57)     A positive electrode plate, a battery, and an electrical device. The positive electrode plate includes a first positive electrode active material and a second positive electrode active material, where the first positive electrode active material includes a compound $Li_xNi_{y-}$ $Co_zM_kMe_pO_rE_s$, and the second positive electrode active material includes a compound $Li_aA_bMn_{1-c}B_cP_{1-d}R_dO_{4-n}D_n$, where the following is satisfied:

**FIG. 1**

EP 4 621 866 A1

**Description**

**CROSS-REFERENCE TO RELATED APPLICATIONS**

This application claims the priority of Chinese patent application 202310237435.7 filed on March 13, 2023, which is incorporated herein by reference in its entirety.

**TECHNICAL FIELD**

This application relates to the field of lithium battery technologies, and in particular, to a positive electrode plate, a battery, and an electrical device.

**BACKGROUND**

In recent years, as the application scope of secondary batteries becomes increasingly wider, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace. Due to the great development of secondary batteries, higher requirements have been put forward for their performance. Cycle performance of existing secondary batteries needs to be improved.

**SUMMARY**

This application is carried out in view of the foregoing problems. An objective of this application is to provide a positive electrode plate, a battery, and an electrical device, and one or more of the following technical effects are achieved: increasing a gram capacity of a battery core, increasing an energy density of the battery, improving cycle performance of the battery, improving a low-temperature discharge capacity retention rate of the battery, and improving high-temperature storage performance of the battery.

To achieve the foregoing objective, according to a first aspect of this application, a positive electrode plate is provided, including a first positive electrode active material and a second positive electrode active material, where

the first positive electrode active material includes a compound $Li_xNi_yCo_zM_kMe_pO_rE_s$, where
M includes one or two of Mn and Al;
Me includes one or more of Zr, Zn, Cu, Cr, Mg, Fe, V, Ti, Sr, Sb, Y, W, and Nb;
E includes one or more of N, F, S, and Cl; and
$0.85 \leq x \leq 1.15$; $0 < y < 1$; $0 < z < 1$; $0 < k < 1$, and optionally, $0.05 \leq k \leq 0.4$; $0 \leq p \leq 0.1$; $1 \leq r \leq 2$, $0 \leq s \leq 1$, and $s+r \leq 2$;
the second positive electrode active material includes a compound $Li_aA_bMn_{1-c}B_cP_{1-d}R_dO_{4-n}D_n$, where
A includes one or more of Zn, Al, Na, K, Mg, Nb, Mo, and W;
B includes one or more of Zn, Al, Na, K, Mg, Mo, W, Ti, V, Zr, Fe, Ni, Co, Ga, Sn, Sb, Nb, and Ge, and optionally, includes one or more of Fe, Ti, V, Ni, Co, and Mg;
R includes one or more of B, Si, N, S, F, Cl, and Br;
D includes one or more of S, F, Cl, and Br; and
a ranges from 0.9 to 1.1, and optionally from 0.977 to 1; b ranges from 0 to 0.1, and optionally from 0 to 0.001; c ranges from 0.001 to 0.9, and optionally from 0.1 to 0.9 or 0.001 to 0.6; d ranges from 0 to 0.1, and optionally from 0 to 0.001 or 0.001 to 0.1; n ranges from 0 to 0.1, optionally from 0 to 0.001 or 0.001 to 0.1; and
the positive electrode plate satisfies:

$$0.90 \leq \frac{m}{n} \leq 1.20$$

where m represents a thickness of the positive electrode plate in a battery fully-charged state, and n represents a thickness of the positive electrode plate in a battery fully-discharged state.

Therefore, in this application, two positive electrode active materials are both used, and a thickness change degree of the positive electrode plate between a fully-charged state and a fully-discharged state is limited by different volume change rates of the two positive electrode active materials during charge and discharge, thereby improving cycle performance of a battery.

In any implementation, $0.90 \leq \dfrac{m}{n} \leq 1.00$. Therefore, an energy density and/or cycle performance of the battery is further improved.

In any implementation, in the first positive electrode active material, y ranges from 0.05 to 0.995, optionally from 0.05 to 0.95, and more optionally from 0.6 to 0.88. Therefore, it is conducive to further improving the energy density of the battery.

In any implementation, in the first positive electrode active material, z ranges from 0.005 to 0.9, optionally from 0.05 to 0.9, and more optionally from 0.05 to 0.35. Therefore, it is conducive to improving electronic conductivity and ionic conductivity of the positive electrode plate, and improving kinetic performance of the positive electrode plate.

In any implementation, a mass of the second positive electrode active material accounts for 20% to 80%, optionally 30% to 70%, and more optionally 40% to 65% of a total mass of the first positive electrode active material and the second positive electrode active material. Therefore, it is conducive to finding a balance of performance of the battery in terms of a capacity, an energy density, and a cycle life, and optimizing overall performance of the battery.

In any implementation, the first positive electrode active material is a monocrystalline or quasi-monocrystalline material and satisfies:

a $D_v50$ particle size of monocrystalline particles or quasi-monocrystalline particles ranges from 0.5 to 5 $\mu$m, and optionally from 1 to 4.1 $\mu$m, and/or

a $D_v99$ particle size of the monocrystalline particles or the quasi-monocrystalline particles ranges from 2 to 18 $\mu$m, and optionally from 3 to 18 $\mu$m, and/or

a BET specific surface area of the first positive electrode active material ranges from 0.2 to 1.8 m$^2$/g, and optionally from 0.4 to 1.2 m$^2$/g.

By controlling the particle sizes, diffusion paths of lithium ions in the positive electrode plate are shortened, bulk diffusion impedance of the lithium ions in the positive electrode plate is reduced, and a polarization degree of the positive electrode plate is reduced, which is beneficial to capacity utilization of the positive electrode plate. By controlling a BET specific surface area, interfacial side reactions and consumption of active lithium ions are reduced, and the cycle life of the battery is improved. By controlling the BET specific surface area, a compaction density of the positive electrode plate and an energy density of the battery are improved. The foregoing particle size or the BET specific surface area achieves at least one of the following technical effects: increasing a gram capacity of a battery core, increasing the energy density of the battery, improving the cycle performance of the battery, improving a low-temperature discharge capacity retention rate of the battery, and improving high-temperature storage performance of the battery.

In any implementation, the first positive electrode active material is a polycrystalline material and satisfies:

a $D_v50$ particle size of secondary particles ranges from 5 to 15 $\mu$m, and optionally from 7 to 13 $\mu$m, and/or

a $D_v99$ particle size of the secondary particles ranges from 2 to 33 $\mu$m, and optionally from 18 to 33 $\mu$m, or is greater than or equal to 2 $\mu$m and is less than 30 $\mu$m, and/or

a particle size of primary particles ranges from 20 to 1500 nm, and optionally from 50 to 800 nm, and/or

a BET specific surface area of the first positive electrode active material ranges from 0.4 to 1.5 m$^2$/g, and optionally from 0.6 to 1.3 m$^2$/g.

By controlling the particle sizes, diffusion paths of lithium ions in the positive electrode plate are shortened, bulk diffusion impedance of the lithium ions in the positive electrode plate is reduced, and a polarization degree of the positive electrode plate is reduced, which is beneficial to capacity utilization of the positive electrode plate. By controlling a BET specific surface area, interfacial side reactions and consumption of active lithium ions are reduced, and the cycle life of the battery is improved. By controlling the BET specific surface area, a compaction density of the positive electrode plate and an energy density of the battery are also improved. The foregoing particle size or the BET specific surface area achieves at least one of the following technical effects: increasing a gram capacity of a battery core, increasing the energy density of the battery, and improving the cycle performance of the battery.

In any implementation, the second positive electrode active material is a monocrystalline or quasi-monocrystalline material and satisfies:

a $D_v50$ particle size of monocrystalline particles or quasi-monocrystalline particles ranges from 0.5 to 5 $\mu$m, and optionally from 0.8 to 4.2 $\mu$m, and/or

a $D_v99$ particle size of the monocrystalline particles or the quasi-monocrystalline particles is greater than 2 $\mu$m and is less than or equal to 32 $\mu$m, and optionally is greater than 2 $\mu$m and is less than 30 $\mu$m, and/or

a BET specific surface area of the second positive electrode active material ranges from 6 to 22 m$^2$/g, and optionally from 8 to 20 m$^2$/g.

Therefore, at least one of the following technical effects is achieved through the foregoing proper particle size combination between the first positive electrode active material and the second positive electrode active material: improving the cycle performance of the battery, improving the low-temperature discharge capacity retention rate of the battery, and improving the high-temperature storage performance of the battery.

In any implementation, the first positive electrode active material includes a core and a coating layer coating the core, where the core is made of the compound $Li_xNi_yCo_zM_kMe_pO_rE_s$, and the coating layer includes carbon; and optionally, a mass of the coating layer accounts for 1% to 2% of the mass of the first positive electrode active material.

Therefore, pulverization and differentiation of the first positive electrode active material during charge and discharge are alleviated, and stability of the positive electrode active material during an electrochemical reaction is improved.

In any implementation, the second positive electrode active material includes a core and a coating layer coating the core, where the core is the compound $Li_aA_bMn_{1-c}B_cP_{1-d}R_dO_{4-n}D_n$, and the coating layer includes one or more of pyrophosphate, phosphate, and carbon.

Therefore, it is conducive to formation of a stable and uniform interface film in a process in which the second positive electrode active material comes into contact with an electrolyte solution, which improves electronic conductivity and ionic conductivity of the material.

According to a second aspect of this application, a battery is further provided, including the positive electrode plate according to the first aspect of this application.

According to a third aspect of this application, an electrical device is provided, including the positive electrode plate according to the first aspect of this application or the battery according to the second aspect of this application.

BRIEF DESCRIPTION OF THE DRAWINGS

FIG. 1 is a schematic diagram of a secondary battery according to an embodiment of this application;
FIG. 2 is an exploded view of the secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electrical device using a secondary battery as a power supply according to an embodiment of this application.

Reference numerals:

1. battery pack; 2. upper box body; 3. lower box body; 4. battery module; 5. secondary battery; 51. housing; 52. electrode assembly; 53. top cover assembly.

**DETAILED DESCRIPTION**

Embodiments of a positive electrode plate, a secondary battery, a battery module, a battery pack, and an electrical device of this application are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Unless otherwise specified, in this application, the term "battery fully-charged state" refers to a state in which a battery is charged to 100% SOC.

Unless otherwise specified, in this application, the term "battery fully-discharged state" refers to a state in which a battery is discharged to 0% SOC.

Unless otherwise specified, in this application, the term "$D_v50$ particle size" refers to a particle size accounting for 50% of a cumulative volume from a small-particle size side in a volume-based particle size distribution.

Unless otherwise specified, in this application, the term "$D_v99$ particle size" refers to a particle size accounting for 99% of a cumulative volume from a small-particle size side in a volume-based particle size distribution.

Unless otherwise specified, in this application, the term "monocrystalline or quasi-monocrystalline material particle" refers to a single particle (that is, a primary particle).

Unless otherwise specified, in this application, the terms "secondary particle" and "polycrystalline material particle" generally have similar meanings, and indicate a particle formed by agglomeration of more than 100 primary particles with an average particle size ranging from 50 to 800 nm.

Unless otherwise specified, in this application, if quantities and average particle sizes of primary particles in more than 50% (including 50%) of collected agglomerated particles satisfy the definition of "polycrystalline material particle", the positive electrode active material is a polycrystalline material; otherwise, the positive electrode active material is a monocrystalline or quasi-monocrystalline material.

[Secondary battery]

A secondary battery, or referred to as a rechargeable battery or a storage battery, refers to a battery that can be reused by activating its active material through charging after the battery is discharged.

Generally, the secondary battery includes a positive electrode plate, a negative electrode plate, a separator, and an electrolyte solution. During charging and discharging of the battery, active ions (for example, lithium ions) are intercalated and deintercalated back and forth between the positive electrode plate and the negative electrode plate. The separator is arranged between the positive electrode plate and the negative electrode plate, and mainly serves to prevent a short circuit between the positive electrode and the negative electrode while allowing the active ions to pass through. The electrolyte solution mainly serves to conduct the active ions between the positive electrode plate and the negative electrode plate.

[Positive electrode plate]

An implementation of this application provides a positive electrode plate, including a first positive electrode active material and a second positive electrode active material, where

the first positive electrode active material includes a compound $Li_xNi_yCo_zM_kMe_pO_rE_s$, where
M includes one or two of Mn and Al;
Me includes one or more of Zr, Zn, Cu, Cr, Mg, Fe, V, Ti, Sr, Sb, Y, W, and Nb;

E includes one or more of N, F, S, and Cl; and

$0.85 \leq x \leq 1.15$; $0 < y < 1$; $0 < z < 1$; $0 < k < 1$, and optionally, $0.05 \leq k \leq 0.4$; $0 \leq p \leq 0.1$; $1 \leq r \leq 2$, $0 \leq s \leq 1$, and $s+r \leq 2$;

the second positive electrode active material includes a compound $Li_aA_bMn_{1-c}B_cP_{1-d}R_dO_{4-n}D_n$, where

A includes one or more of Zn, Al, Na, K, Mg, Nb, Mo, and W;

B includes one or more of Zn, Al, Na, K, Mg, Mo, W, Ti, V, Zr, Fe, Ni, Co, Ga, Sn, Sb, Nb, and Ge, and optionally, includes one or more of Fe, Ti, V, Ni, Co, and Mg;

R includes one or more of B, Si, N, S, F, Cl, and Br;

D includes one or more of S, F, Cl, and Br; and

a ranges from 0.9 to 1.1, and optionally from 0.977 to 1; b ranges from 0 to 0.1, and optionally from 0 to 0.001; c ranges from 0.001 to 0.9, and optionally from 0.1 to 0.9 or 0.001 to 0.6; d ranges from 0 to 0.1, and optionally from 0 to 0.001 or 0.001 to 0.1; n ranges from 0 to 0.1, optionally from 0 to 0.001 or 0.001 to 0.1; and

the positive electrode plate satisfies:

$$0.90 \leq \frac{m}{n} \leq 1.20$$

where m represents a thickness of the positive electrode plate in a battery fully-charged state, and n represents a thickness of the positive electrode plate in a battery fully-discharged state.

Although the mechanism is still unclear, the applicant unexpectedly discovered that in this application, two positive electrode active materials are both used, and a thickness change degree of the positive electrode plate between a fully-charged state and a fully-discharged state is limited by different volume change rates of the two positive electrode active materials during charge and discharge, thereby improving cycle performance of a battery.

In some implementations, $0.90 \leq \frac{m}{n} \leq 1.00$, where $\frac{m}{n}$ may, for example, be 0.9, 0.92, 0.95, 0.98, 1, 1.03, 1.05, 1.07, 1.1, 1.13, 1.16, 1.18, 1.2, and a range formed by any of the foregoing values. Therefore, an energy density and/or cycle performance of the battery is further improved.

In some implementations, thicknesses of a battery in a fully-charged state and a fully-discharged state can be measured through a conventional method in the art. For example, a method for measuring a thickness of a battery in a fully-charged or fully-discharged state includes: disassembling the battery after the battery is fully charged or fully discharged, taking out a positive electrode plate, cleaning and drying the positive electrode plate, dividing the positive electrode plate into a plurality of parts along a length direction, measuring thicknesses of each part at a same quantity of points, and recording an average value of all measured values as the thickness of the battery in the fully charged or fully discharged.

In some implementations, in the first positive electrode active material, y ranges from 0.05 to 0.995, optionally from 0.05 to 0.95, and more optionally from 0.6 to 0.88; and may, for example, be 0.05, 0.1, 0.2, 0.3, 0.4, 0.5, 0.55, 0.6, 0.7, 0.8, 0.9, 0.95, 0.995, and a range formed by any of the foregoing values. Therefore, it is conducive to further improving the energy density of the battery.

In some implementations, in the first positive electrode active material, z ranges from 0.005 to 0.9, optionally from 0.05 to 0.9, and more optionally from 0.05 to 0.35; and may, for example, be 0.005, 0.01, 0.02, 0.05, 0.08, 0.1, 0.2, 0.3, 0.4, 0.5, 0.6, 0.7, 0.8, 0.9, and a range formed by any of the foregoing values. Therefore, it is conducive to improving electronic conductivity and ionic conductivity of the positive electrode plate, and improving kinetic performance of the positive electrode plate.

In some implementations, a mass of the second positive electrode active material accounts for 20% to 80%, optionally 30% to 70%, and more optionally 40% to 65% of a total mass of the first positive electrode active material and the second positive electrode active material. Therefore, it is conducive to finding a balance of performance of the battery in terms of a capacity, an energy density, and a cycle life, and optimizing overall performance of the battery.

In some implementations, in the first positive electrode active material, x is 0.85, 0.9, 0.95, 1, 1.05, 1.1, 1.15, and a range formed by any of the foregoing values.

In some implementations, in the first positive electrode active material, k is 0.01, 0.05, 0.1, 0.2, 0.3, 0.4, 0.5, 0.6, 0.7, 0.8, 0.9, and a range formed by any of the foregoing values.

In some implementations, in the second positive electrode active material, a is 0.9, 0.93, 0.95, 0.97, 0.98, 0.99, 1, 1.01, 1.03, 1.05, 1.07, 1.1, and a range formed by any of the foregoing values.

In some implementations, in the second positive electrode active material, b is 0, 0.001, 0.005, 0.01, 0.05, 0.07, 0.1, and a range formed by any of the foregoing values.

In some implementations, in the second positive electrode active material, c is 0.001, 0.005, 0.01, 0.05, 0.1, 0.2, 0.3, 0.4, 0.5, 0.6, 0.7, 0.8, 0.9, and a range formed by any of the foregoing values.

In some implementations, in the second positive electrode active material, d is 0, 0.001, 0.005, 0.01, 0.03, 0.05, 0.07, 0.09, and 0.1, and a range formed by any of the foregoing values.

In some implementations, the first positive electrode active material is a monocrystalline or quasi-monocrystalline material and satisfies:

a $D_v50$ particle size of monocrystalline particles or quasi-monocrystalline particles ranges from 0.5 to 5 $\mu$m, and optionally from 1 to 4.1 $\mu$m; and may, for example, be 0.9 $\mu$m, 1 $\mu$m, 2 $\mu$m, 3 $\mu$m, 4 $\mu$m, 5 $\mu$m, and a range formed by any of the foregoing values, and/or

a $D_v99$ particle size of the monocrystalline particles or quasi-monocrystalline particles ranges from 2 to 18 $\mu$m, and optionally from 3 to 18 $\mu$m; and may, for example, be 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, and a range formed by any of the foregoing values, and/or

a BET specific surface area of the first positive electrode active material ranges from 0.2 to 1.8 m$^2$/g, and optionally from 0.4 to 1.2 m$^2$/g; and may, for example, be 0.2 m$^2$/g, 0.4 m$^2$/g, 0.5 m$^2$/g, 0.7 m$^2$/g, 0.8 m$^2$/g, 0.9 m$^2$/g, 1.0 m$^2$/g, 1.2 m$^2$/g, 1.4 m$^2$/g, 1.5 m$^2$/g, 1.6 m$^2$/g, 1.7 m$^2$/g, 1.8 m$^2$/g, and a range formed by any of the foregoing values.

By controlling the particle sizes, diffusion paths of lithium ions in the positive electrode plate are shortened, bulk diffusion impedance of the lithium ions in the positive electrode plate is reduced, and a polarization degree of the positive electrode plate is reduced, which is beneficial to capacity utilization of the positive electrode plate. By controlling a BET specific surface area, interfacial side reactions and consumption of active lithium ions are reduced, and the cycle life of the battery is improved. By controlling the BET specific surface area, a compaction density of the positive electrode plate and an energy density of the battery are improved. The foregoing particle size or the BET specific surface area achieves at least one of the following technical effects: increasing a gram capacity of a battery core, increasing the energy density of the battery, improving the cycle performance of the battery, improving a low-temperature discharge capacity retention rate of the battery, and improving high-temperature storage performance of the battery.

In some implementations, the first positive electrode active material is a polycrystalline material and satisfies:

a $D_v50$ particle size of secondary particles ranges from 5 to 15 $\mu$m, and optionally from 7 to 13 $\mu$m; and may, for example, be 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, and a range formed by any of the foregoing values, and/or

a $D_v99$ particle size of the secondary particles ranges from 2 $\mu$m to 33 $\mu$m, and optionally from 18 $\mu$m to 33 $\mu$m, or is greater than or equal to 2 $\mu$m and less than 30 $\mu$m; and may, for example, be 2 $\mu$m, 4 $\mu$m, 5 $\mu$m, 7 $\mu$m, 9 $\mu$m, 10 $\mu$m, 12 $\mu$m, 15 $\mu$m, 17 $\mu$m, 19 $\mu$m, 20 $\mu$m, 22 $\mu$m, 24 $\mu$m, 25 $\mu$m, 27 $\mu$m, 29 $\mu$m, 30 $\mu$m, 31 $\mu$m, 32 $\mu$m, 33 $\mu$m, and a range formed by any of the foregoing values; and/or

a particle size of primary particles ranges from 20 to 1500 nm, and optionally from 50 to 800 nm; and may, for example, be 20 nm, 50 nm, 100 nm, 200 nm, 300 nm, 500 nm, 700 nm, 800 nm, 1000 nm, 1200 nm, 1300 nm, 1500 nm, and a range formed by any of the foregoing values; and/or

a BET specific surface area of the first positive electrode active material ranges from 0.4 to 1.5 m$^2$/g, and optionally from 0.6 to 1.3 m$^2$/g; and may, for example, be 0.4 m$^2$/g, 0.6 m$^2$/g, 0.8 m$^2$/g, 1.0 m$^2$/g, 1.2 m$^2$/g, 1.3 m$^2$/g, 1.4 m$^2$/g, 1.5 m$^2$/g, and a range formed by any of the foregoing values.

By controlling the particle sizes, diffusion paths of lithium ions in the positive electrode plate are shortened, bulk diffusion impedance of the lithium ions in the positive electrode plate is reduced, and a polarization degree of the positive electrode plate is reduced, which is beneficial to capacity utilization of the positive electrode plate. By controlling a BET specific surface area, interfacial side reactions and consumption of active lithium ions are reduced, and the cycle life of the battery is improved. By controlling the BET specific surface area, a compaction density of the positive electrode plate and an energy density of the battery are also improved. The foregoing particle size or the BET specific surface area achieves at least one of the following technical effects: increasing a gram capacity of a battery core, increasing the energy density of the battery, and improving the cycle performance of the battery.

In some implementations, the second positive electrode active material is a monocrystalline or quasi-monocrystalline material and satisfies:

a $D_v50$ particle size of monocrystalline particles or quasi-monocrystalline particles ranges from 0.5 to 5 $\mu$m, and optionally from 0.8 to 4.2 $\mu$m; and may, for example, be 0.5 $\mu$m, 0.8 $\mu$m, 1 $\mu$m, 1.5 $\mu$m, 2 $\mu$m, 2.6 $\mu$m, 3 $\mu$m, 3.5 $\mu$m, 4 $\mu$m, 4.2 $\mu$m, 4.5 $\mu$m, 4.7 $\mu$m, 5 $\mu$m, and a range formed by any of the foregoing values, and/or

a $D_v99$ particle size of the monocrystalline particles or quasi-monocrystalline particles ranges is greater than 2 $\mu$m and is less than or equal to 32 $\mu$m, and optionally is greater than or equal to 2 $\mu$m and is less than 30 $\mu$m; and may, for example, be 3 $\mu$m, 5 $\mu$m, 6 $\mu$m, 8 $\mu$m, 10 $\mu$m, 12 $\mu$m, 13 $\mu$m, 15 $\mu$m, 17 $\mu$m, 18 $\mu$m, 19 $\mu$m, 20 $\mu$m, 22 $\mu$m, 25 $\mu$m, 27 $\mu$m, 29 $\mu$m, 30 $\mu$m, 31 $\mu$m, 32 $\mu$m, and a range formed by any of the foregoing values; and/or

a BET specific surface area of the second positive electrode active material ranges from 6 to 22 m$^2$/g, and optionally

from 8 to 20 $m^2/g$; and may, for example, be 6 $m^2/g$, 7 $m^2/g$, 8 $m^2/g$, 9 $m^2/g$, 10 $m^2/g$, 11 $m^2/g$, 12 $m^2/g$, 14 $m^2/g$, 15 $m^2/g$, 16 $m^2/g$, 18 $m^2/g$, 20 $m^2/g$, 21 $m^2/g$, 22 $m^2/g$, and a range formed by any of the foregoing values.

Therefore, at least one of the following technical effects is achieved through the foregoing proper particle size combination between the first positive electrode active material and the second positive electrode active material: improving the cycle performance of the battery, improving the low-temperature discharge capacity retention rate of the battery, and improving the high-temperature storage performance of the battery.

In some implementations, the $D_v50$ particle size and the $D_v99$ particle size can be measured through a conventional method in the art, and can, for example, be measured according to the method in the national standard GB/T 19077-2016 "Particle size distribution laser diffraction method", where deionized water is used as a solvent.

In some implementations, the BET specific surface area can be measured through a conventional method in the art, and can, for example, be measured according to the method in the national standard GB/T 19587-2004 "Determination of the specific surface area of solids by gas adsorption using the BET method".

In some implementations, the BET specific surface area may, for example, be tested in a constant temperature environment of 25°C.

In some implementations, a particle size of primary particles can be measured through a conventional method in the art, for example, using a scanning electron microscope. A sample and a magnification are adjusted such that there are more than 10 agglomerated particles in the field of view. A quantity of primary particles forming each agglomerated particle is measured, and sizes of the primary particles in a length direction are measured with a ruler and recorded as particle sizes. The particle sizes of the primary particles in each agglomerated particle are sorted in descending order. 1/10 of data with a maximum particle size and 1/10 of data with a minimum particle size are removed, and the remaining particle size data is averaged as a particle size of the primary particles.

In some implementations, the first positive electrode active material includes a core and a coating layer coating the core, where the core is made of the compound $Li_xNi_yCo_zM_kMe_pO_rE_s$, and the coating layer includes carbon; and optionally, a mass of the coating layer accounts for 1% to 2% of the mass of the first positive electrode active material.

Therefore, pulverization and differentiation of the first positive electrode active material during charge and discharge are alleviated, and stability of the positive electrode active material during an electrochemical reaction is improved.

In some implementations, the second positive electrode active material includes a core and a coating layer coating the core, where the core is the compound $Li_aA_bMn_{1-c}B_cP_{1-d}R_dO_{4-n}D_n$, and the coating layer includes one or more of pyrophosphate, phosphate, and carbon.

Therefore, it is conducive to formation of a stable and uniform interface film in a process in which the second positive electrode active material comes into contact with an electrolyte solution, which improves electronic conductivity and ionic conductivity of the material.

In some implementations, a general formula of pyrophosphate may be $N_e(P_2O_7)_f$, where N includes one or more of Li, Fe, Ni, Mg, Co, Cu, Zn, Ti, Ag, Zr, Nb, Mn, and Al, e ranges from 1 to 4, and f ranges from 1 to 6.

In some implementations, a general formula of phosphate may be $X_m(PO_4)_q$, where X includes one or more of Li, Fe, Ni, Mg, Co, Cu, Zn, Ti, Ag, Zr, Nb, Mn, and Al, m ranges from 1 to 2, and q ranges from 1 to 4.

The positive electrode plate generally includes a positive electrode current collector and a positive electrode film layer arranged on at least one surface of the positive electrode current collector, where the positive electrode film layer includes the foregoing first positive electrode active material and the foregoing second positive electrode active material.

By way of example, the positive electrode current collector has two opposite surfaces in a thickness direction of the positive electrode current collector, and the positive electrode film layer is arranged on either or both of the two opposite surfaces of the positive electrode current collector.

In some implementations, the positive electrode current collector may be metal foil or a composite current collector. For example, the metal foil may be aluminum foil. The composite current collector may include a polymer material base layer and a metal layer formed on at least one surface of the polymer material base layer. The composite current collector may be formed by forming a metal material (such as aluminum, an aluminum alloy, nickel, a nickel alloy, titanium, a titanium alloy, silver, and a silver alloy) on a polymer material substrate (such as a substrate of polypropylene (PP), polyethylene terephthalate (PET), polybutylene terephthalate (PBT), polystyrene (PS), or polyethylene (PE)).

In some implementations, the positive electrode film layer further optionally includes a binder. By way of example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoroprotpylene-tetrafluoroethylene terpolymer, tetrafluoroethylene-hexafluoropropylene copolymer, and fluoroacrylate resin.

In some implementations, the positive electrode film layer further optionally includes a conductive agent. By way of example, the conductive agent may include at least one of superconducting carbon, acetylene black, carbon black, Ketjen black, carbon dots, carbon nanotubes, graphene, and carbon nanofibers.

In some implementations, the positive electrode plate may be prepared in the following manner. The components for preparing the positive electrode plate, such as the first positive electrode active material, the second positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

By way of example, the negative electrode current collector has two opposite surfaces in a thickness direction of the negative electrode current collector, and the negative electrode film layer is arranged on either or both of the two opposite surfaces of the negative electrode current collector.

In some implementations, the negative electrode current collector may be metal foil or a composite current collector. For example, copper foil may be used as the metal foil. The composite current collector may include a polymer material base layer and a metal layer formed on at least one surface of the polymer material base layer. The composite current collector may be formed by forming a metal material (such as copper, a copper alloy, nickel, a nickel alloy, titanium, a titanium alloy, silver, and a silver alloy) on a polymer material substrate (such as a substrate of polypropylene (PP), polyethylene terephthalate (PET), polybutylene terephthalate (PBT), polystyrene (PS), or polyethylene (PE)).

In some implementations, the negative electrode active material may be the negative electrode active material for the battery known in the art. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present disclosure is not limited to these materials, and other conventional materials that can be used as the negative electrode active material of the battery may also be used. These negative electrode active material electrode active materials may be used alone or in combination.

In some implementations, the negative electrode film layer further optionally includes a binder. By way of example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. By way of example, the conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes other additives, for example, a thickener (such as sodium carboxymethyl cellulose (CMC-Na)).

In some implementations, the negative electrode plate may be prepared in the following manner: dispersing components for preparing the negative electrode plate, for example, a negative electrode active material, a conductive agent, a binder, and any other components into a solvent (for example, deionized water) to form a negative electrode slurry; coating the negative electrode slurry on the negative electrode current collector to obtain the negative electrode plate subsequent to procedures such as drying and cold pressing.

[Electrolyte]

The electrolyte serves to conduct ions between a positive electrode plate and a negative electrode plate. There is no specific limitation on a type of the electrolyte in this application, and selection may be performed according to requirements. For example, the electrolyte may be in a liquid state, a gel state, or a full solid state.

In some implementations, the electrolyte is in a liquid state and includes an electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution further optionally includes an additive. By way of example, the additive may include a negative electrode film-forming additive or a positive electrode film-forming additive, or may further include an additive that can improve some performance of a battery, such as an additive that improves overcharge performance of the battery or an additive that improves high-temperature performance or low-temperature performance of the battery.

[Separator]

In some implementations, a secondary battery further includes the separator. There is no particular limitation on a type of the separator in this application, and any well-known separator with a porous structure that has good chemical stability and mechanical stability can be selected.

In some implementations, a material of the separator may be selected from at least one of glass fiber, non-woven cloth, polyethylene, polypropylene, and polyvinylidene fluoride. The separator may be a single-layer film or a multi-layer composite film. There is no particular limitation. When the separator is the multi-layer composite film, a material of each layer may be identical or different. There is no particular limitation.

In some implementations, a positive electrode plate, a negative electrode plate, and the separator may be made into an electrode assembly by a winding process or a stacking process.

In some implementations, the secondary battery may include an outer package. The outer package may be used to package the electrode assembly and an electrolyte.

In some implementations, the outer package of the secondary battery may be a hard housing, such as a hard plastic housing, an aluminum housing, and a steel housing. The outer package of the secondary battery may also be a soft package, such as a pouch soft package. A material of the soft package may be plastic, and examples of the plastic include polypropylene, polybutylene terephthalate, and polybutylene succinate.

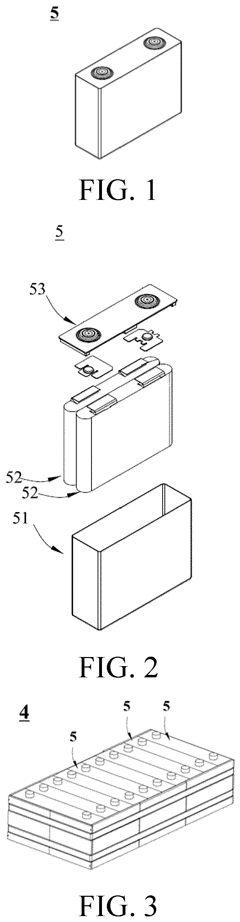

A shape of the secondary battery is not particularly limited in this application, and the secondary battery may be in a shape of a cylinder, in a shape of a square, or in any other shape. For example, FIG. 1 shows an example of a secondary battery 5 having a square structure.

In some implementations, referring to FIG. 2, the outer package may include a housing 51 and a cover plate 53. The housing 51 may include a bottom plate and side plates connected to the bottom plate, and the bottom plate and the side plates are enclosed to form an accommodating cavity. The housing 51 has an opening communicating with the accommodating cavity, and the cover plate 53 can cover the opening to seal the accommodating cavity. The positive electrode plate, the negative electrode plate, and the separator may form an electrode assembly 52 by a winding process or a stacking process. The electrode assembly 52 is enclosed in the accommodating cavity. The electrode assembly 52 is infiltrated by the electrolyte solution. A quantity of electrode assemblies 52 included in the secondary battery 5 may be one or more. A person skilled in the art may perform selection according to specific actual requirements.

In some implementations, the secondary battery may be assembled into a battery module, a quantity of secondary batteries included in the battery module may be one or more, and a specific quantity may be selected by a person skilled in the art based on application and a capacity of the battery module.

FIG. 3 shows a battery module 4 used as an example. Referring to FIG. 3, in the battery module 4, a plurality of secondary batteries 5 may be sequentially arranged in a length direction of the battery module 4. Certainly, the plurality of secondary batteries 5 may also be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some implementations, the battery module may be further assembled into a battery pack, a quantity of battery modules included in the battery pack may be one or more, and the specific quantity may be selected by a person skilled in the art based on application and a capacity of the battery pack.

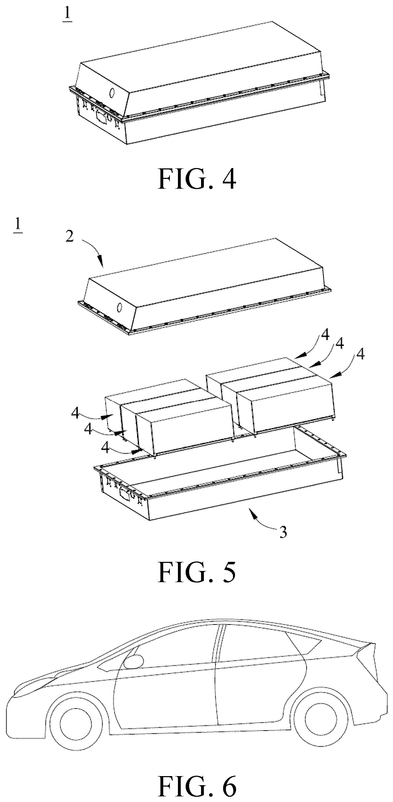

FIG. 4 and FIG. 5 show a battery pack 1 used as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3, to form an enclosed space used for accommodating the battery module 4. The plurality of battery modules 4 can be arranged in the battery box in any manner.

In addition, this application further provides an electrical device, where the electrical device includes at least one of the secondary battery, the battery module, or the battery pack provided in this application. The secondary battery, the battery module, or the battery pack may be used as a power supply of the electrical device, or may be used as an energy storage unit of the electrical device. The electrical device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

A secondary battery, a battery module, or a battery pack can be selected based on a usage need of an electrical device.

FIG. 6 shows an electrical device used as an example. The electrical device is a pure electric vehicle, a hybrid electric vehicle, or a plug-in hybrid electric vehicle, or the like. To satisfy requirements of the electrical device for a high power and a high energy density of the secondary battery, a battery pack or a battery module may be used.

[Examples]

Examples of this application are described below. The examples described below are illustrative, are merely used to explain this application, and should not be construed as a limitation to this application. The examples in which specific technologies or conditions are not indicated shall be carried out in accordance with the technologies or conditions described in the literature in the art or in accordance with the product specification. All of the used agents or instruments which are not specified with manufacturers are conventional commercially-available products.

**Example 1**

(1) First positive electrode active material:

$LiNi_{0.55}Co_{0.1}Mn_{0.35}O_2$, purchased from Guizhou Zhenhua E-Chem Inc., and having an item number of energy-type NCM523.

(2) Second positive electrode active material:

$LiMn_{0.4}Fe_{0.6}PO_4$, purchased from Shenzhen Dynanonic Co., Ltd., and having an item number of D1.

(3) Preparation of a positive electrode plate: The first positive electrode active material, the second positive electrode active material, a binder, namely, polyvinylidene fluoride (PVDF), and a conductive agent, namely, acetylene black, were dissolved in a solvent N-methylpyrrolidone (NMP) at a mass ratio of 47:47:3:3, the mixture was fully stirred and uniformly mixed, and then a positive electrode slurry was prepared; the positive electrode slurry was uniformly coated on a positive electrode current collector, namely, aluminum foil; and then, the product was dried, cold pressed, and cut to obtain a positive electrode plate, where a total mass of the two positive electrode active materials coated on each square centimeter of the positive electrode current collector was 500 mg.

(4) Preparation of a negative electrode plate: A negative electrode active material, namely, artificial graphite, a conductive agent, namely, acetylene black, a binder, namely, styrene-butadiene rubber (SBR), and a thickener, namely, sodium carboxymethyl cellulose (CMC-Na), were dissolved in deionized water at a mass ratio of 95:2:1:2, and the mixture was fully stirred and uniformly mixed, and then a negative electrode slurry was prepared; the negative electrode slurry was coated on a negative electrode current collector, namely, copper foil; and then the product was dried, cold pressed, and cut to obtain a negative electrode plate.

(5) Separator: A PE film was selected as a separator.

(6) Preparation of an electrolyte solution: Ethylene carbonate (EC), ethyl methyl carbonate (EMC), and diethyl carbonate (DEC) were mixed at a volume ratio of 1:1:1, and then, $LiPF_6$ was uniformly dissolved in the foregoing solution, to obtain an electrolyte solution. In the electrolyte solution, a concentration of $LiPF_6$ was 1 mol/L.

(7) Preparation of a secondary battery: The positive electrode plate, the separator, and the negative electrode plate were stacked in sequence and wound to obtain a battery core; and the battery core was placed into an outer package, the electrolyte solution prepared above was added, and after processes such as packaging, standing, formation, and aging, a secondary battery was obtained.

**Examples 2 to 37 and Comparative examples 1 and 2**

Preparation methods for a secondary battery in Examples 2 to 37 and Comparative examples 1 and 2 are similar to that of Example 1. For details of different parameters, reference may be made to Table 1.

The first positive electrode active materials in Examples 1 to 37 were all purchased from Guizhou Zhenhua E-Chem Inc.

The second positive electrode active materials in Examples 1 to 34 were all purchased from Shenzhen Dynanonic Co., Ltd.

m represented a thickness of the positive electrode plate in a battery fully-charged state.

n represented a thickness of the positive electrode plate in a battery fully-discharged state.

W represented a proportion of a mass of the second positive electrode active material in a total mass of the first positive electrode active material and the second positive electrode active material.

Preparation method for a second positive electrode active material in Examples 1 to 35

Preparation of doped manganese oxalate: 1.3 mol of $MnSO_4.H_2O$ and 0.7 mol of $FeSO_4.H_2O$ were fully mixed in a mixer for 6 hours. The mixture was transferred to a reaction kettle, and 10 L of deionized water and 2 mol of oxalic acid dihydrate (calculated as oxalic acid) were added. The reaction kettle was heated to 80°C, and stirring was performed at a rotational speed of 600 rpm for 6 hours. After the reaction was terminated (no bubbles were generated), a Fe-doped manganese oxalate suspension was obtained. The suspension was then filtered, and a filter cake was dried at 120°C and then ground to obtain Fe-doped manganese oxalate particles whose median particle size $D_v50$ was about 100 nm.

Preparation of doped lithium manganese phosphate: 1 mol of the foregoing manganese oxalate particles, 0.497 mol of lithium carbonate, 0.001 mol of $Mo(SO_4)_3$, an aqueous solution of phosphoric acid with a concentration of 85% including 0.999 mol of phosphoric acid, and 0.001 mol of $H_4SiO_4$, 0.0005 mol of $NH_4HF_2$, and 0.005 mol of sucrose were added to 20 L of deionized water. The mixture was transferred to a sand mill and fully ground and stirred for 10 hours to obtain a slurry. The slurry was transferred to a spray drying device for spray drying granulation, and dried for 4 hours with a drying temperature set to 250°C, to obtain particles. Under a protective atmosphere of nitrogen (90 vol%)+hydrogen (10 vol%), the foregoing powder was sintered at 700°C for 10 hours. An element content of the positive electrode active material can be detected through inductively coupled plasma optical emission spectroscopy (ICP).

Preparation method for a second positive electrode active material in Examples 1 to 36

The preparation method for a second positive electrode active material was the same as that in Examples 1 to 36 except that the amount of high-purity $Li_2CO_3$ was changed to 0.4885 mol, $Mo(SO_4)_3$ was replaced with $MgSO_4$, the amount of $FeSO_4.H_2O$ was changed to 0.68 mol, 0.02 mol of $Ti(SO_4)_2$ was further added when the doped manganese oxalate was prepared, and $H_4SiO_4$ was replaced with $HNO_3$. An element content of the positive electrode active material can be detected through inductively coupled plasma optical emission spectroscopy (ICP).

Preparation method for a second positive electrode active material in Examples 1 to 37

The preparation method for a second positive electrode active material was the same as that in Examples 1 to 36 except that the amount of high-purity $Li_2CO_3$ was changed to 0.496 mol, $Mo(SO_4)_3$ was replaced with $W(SO_4)_3$, and $H_4SiO_4$ was replaced with $H_2SO_4$. An element content of the positive electrode active material can be detected through inductively coupled plasma optical emission spectroscopy (ICP).

Table 1: Parameter results of Examples 1 to 37 and Comparative examples 1 and 2

| | First positive electrode active material | | | | | | | Second positive electrode active material | | | | | | |
| | Substance | y | z | Crystal form | Monocrystalline particles or secondary particles | | Particle size of primary particles (nm) | BET (m²/g) | Substance | Crystal form | $D_v50$ (μm) | $D_v99$ (μm) | BET (m²/g) | m/n | W |
| | | | | | $D_v50$ (μm) | $D_v99$ (μm) | | | | | | | | | |
| Example 1 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 2 | 18 | 12 | 0.948 | 50% |
| Example 2 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 0.9 | 5 | 18 | 1.131 | 50% |
| Example 3 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 4 | 28 | 10 | 1.073 | 50% |
| Example 4 | $LiNi_{0.1}CO_{0.5}Mn_{0.4}O_2$ | 0.1 | 0.5 | Monocrystal | 2 | 11 | / | 0.8 | $LiMn_{0.4}Fe_{0.6}PO_4$ | Monocrystal | 2 | 18 | 12 | 0.948 | 50% |
| Example 5 | $LiNi_{0.9}sCo_{0.05}M-n_{0.1}O_2$ | 0.95 | 0.05 | Monocrystal | 2 | 11 | / | 0.8 | $LiMn_{0.4}Fe_{0.6}PO_4$ | Monocrystal | 2 | 18 | 12 | 0.948 | 50% |
| Example 6 | $LiNi_{0.05}Co_{0.9}Mn_{0.05}O_2$ | 0.05 | 0.9 | Monocrystal | 2 | 11 | / | 0.8 | $LiMn_{0.4}Fe_{0.6}PO_4$ | Monocrystal | 2 | 18 | 12 | 0.948 | 50% |
| Example 7 | $LiNi_{0.55}Co_{0.1}Mn_{0.35}O_2$ | 0.55 | 0.1 | Monocrystal | 1 | 6 | / | 1.2 | $LiMn_{0.4}Fe_{0.6}PO_4$ | Monocrystal | 2 | 18 | 12 | 1.060 | 50% |
| Example 8 | $LiNi_{0.55}Co_{0.1}Mn_{0.35}O_2$ | 0.55 | 0.1 | Monocrystal | 4 | 16 | / | 0.6 | $LiMn_{0.4}Fe_{0.6}PO_4$ | Monocrystal | 2 | 18 | 12 | 0.928 | 50% |
| Example 9 | $LiNi_{0.55}Co_{0.1}Mn_{0.35}O_2$ | 0.55 | 0.1 | Polycrystal | 10 | 22 | 500 | 0.7 | $LiMn_{0.4}Fe_{0.6}PO_4$ | Monocrystal | 2 | 18 | 12 | 0.930 | 50% |
| Example 10 | $LiNi_{0.55}Co_{0.1}Mn_{0.35}O_2$ | 0.55 | 0.1 | Polycrystal | 8 | 18 | 500 | 0.8 | $LiMn_{0.4}Fe_{0.6}PO_4$ | Monocrystal | 2 | 18 | 12 | 0.918 | 50% |
| Example 11 | $LiNi_{0.55}Co_{0.1}Mn_{0.35}O_2$ | 0.55 | 0.1 | Polycrystal | 12 | 25 | 500 | 0.6 | $LiMn_{0.4}Fe_{0.6}PO_4$ | Monocrystal | 2 | 18 | 12 | 0.943 | 50% |
| Example 12 | $LiNi_{0.55}Co_{0.1}Mn_{0.35}O_2$ | 0.55 | 0.1 | Polycrystal | 8 | 18 | 50 | 0.8 | $LiMn_{0.4}Fe_{0.6}PO_4$ | Monocrystal | 2 | 18 | 12 | 0.918 | 50% |
| Example 13 | $LiNi_{0.55}Co_{0.1}Mn_{0.35}O_2$ | 0.55 | 0.1 | Polycrystal | 8 | 18 | 800 | 0.8 | $LiMn_{0.4}Fe_{0.6}PO_4$ | Monocrystal | 2 | 18 | 12 | 0.918 | 50% |
| Example 14 | $LiNi_{0.55}Co_{0.1}Mn_{0.35}O_2$ | 0.55 | 0.1 | Monocrystal | 2 | 11 | / | 0.8 | $LiMn_{0.9}Fe_{0.1}PO_4$ | Monocrystal | 2 | 18 | 12 | 0.948 | 50% |
| Example 15 | $LiNi_{0.55}Co_{0.1}Mn_{0.35}O_2$ | 0.55 | 0.1 | Monocrystal | 2 | 11 | / | 0.8 | $LiMn_{0.1}Fe_{0.9}PO_4$ | Monocrystal | 2 | 18 | 12 | 0.948 | 50% |
| Example 16 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 0.7 | 15 | 18 | 0.910 | 50% |
| Example 17 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 5 | 32 | 9 | 1.181 | 50% |
| Example 18 | $LiNi_{0.55}Co_{0.1}Mn_{0.35}O_2$ | 0.55 | 0.1 | Monocrystal | 0.9 | 11 | / | 1.3 | $LiMn_{0.4}Fe_{0.6}PO_4$ | Monocrystal | 2 | 18 | 12 | 1.178 | 50% |
| Example 19 | $LiNi_{0.55}Co_{0.1}Mn_{0.35}O_2$ | 0.55 | 0.1 | Monocrystal | 5 | 18 | / | 0.5 | $LiMn_{0.4}Fe_{0.6}PO_4$ | Monocrystal | 2 | 18 | 12 | 0.929 | 50% |
| Example 20 | $LiNi_{0.55}Co_{0.1}Mn_{0.35}O_2$ | 0.55 | 0.1 | Polycrystal | 5 | 18 | 500 | 1.3 | $LiMn_{0.4}Fe_{0.6}PO_4$ | Monocrystal | 2 | 18 | 12 | 0.929 | 50% |
| Example 21 | $LiNi_{0.55}Co_{0.1}Mn_{0.35}O_2$ | 0.55 | 0.1 | Polycrystal | 15 | 33 | 500 | 0.6 | $LiMn_{0.4}Fe_{0.6}PO_4$ | Monocrystal | 2 | 18 | 12 | 0.995 | 50% |
| Example 22 | $LiNi_{0.55}Co_{0.1}Mn_{0.35}O_2$ | 0.55 | 0.1 | Polycrystal | 8 | 18 | 20 | 0.8 | $LiMn_{0.4}Fe_{0.6}PO_4$ | Monocrystal | 2 | 18 | 12 | 0.918 | 50% |
| Example 23 | $LiNi_{0.55}Co_{0.1}Mn_{0.35}O_2$ | 0.55 | 0.1 | Polycrystal | 8 | 18 | 1500 | 0.8 | $LiMn_{0.4}Fe_{0.6}PO_4$ | Monocrystal | 2 | 18 | 12 | 0.918 | 50% |

| | First positive electrode active material | | | | | | | | Second positive electrode active material | | | | | m/n | W |
|---|---|---|---|---|---|---|---|---|---|---|---|---|---|---|---|
| | Substance | y | z | Crystal form | Monocrystalline particles or secondary particles | | Particle size of primary particles (nm) | BET (m²/g) | Substance | Crystal form | $D_v50$ (μm) | $D_v99$ (μm) | BET (m²/g) | | |
| | | | | | $D_v50$ (μm) | $D_v99$ (μm) | | | | | | | | | |
| Example 24 | $LiNi_{0.55}Co_{0.1}Mn_{0.35}O_2$ | 0.55 | 0.1 | Monocrystal | 4.3 | 18 | / | 0.5 | $LiMn_{0.4}Fe_{0.6}PO_4$ | Monocrystal | 2 | 18 | 12 | 0.934 | 50% |
| Example 25 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 2 | 18 | 8 | 0.948 | 20% |
| Example 26 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 2 | 18 | 8 | 0.948 | 80% |
| Example 27 | $LiNi_{0.55}Co_{0.1}Mn_{0.35}O_2$ | 0.55 | 0.1 | Monocrystal | 4 | 16 | / | 0.2 | $LiMn_{0.4}Fe_{0.6}PO_4$ | Monocrystal | 2 | 18 | 8 | 0.928 | 50% |
| Example 28 | $LiNi_{0.55}Co_{0.1}Mn_{0.35}O_2$ | 0.55 | 0.1 | Monocrystal | 4 | 16 | / | 0.4 | $LiMn_{0.4}Fe_{0.6}PO_4$ | Monocrystal | 2 | 18 | 8 | 0.928 | 50% |
| Example 29 | $LiNi_{0.55}Co_{0.1}Mn_{0.35}O_2$ | 0.55 | 0.1 | Monocrystal | 1 | 6 | / | 1.5 | $LiMn_{0.4}Fe_{0.6}PO_4$ | Monocrystal | 2 | 18 | 8 | 1.060 | 50% |
| Example 30 | $LiNi_{0.55}Co_{0.1}Mn_{0.35}O_2$ | 0.55 | 0.1 | Monocrystal | 1 | 6 | / | 1.8 | $LiMn_{0.4}Fe_{0.6}PO_4$ | Monocrystal | 2 | 18 | 8 | 1.060 | 50% |
| Example 31 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 5 | 32 | 8 | 1.181 | 50% |
| Example 32 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 5 | 32 | 6 | 1.181 | 50% |
| Example 33 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 0.9 | 5 | 20 | 1.131 | 50% |
| Example 34 | $LiNi_{0.55}Co_{0.1}Mn_{0.35}O_2$ | 0.55 | 0.1 | Monocrystal | 2 | 11 | / | 0.8 | $LiMn_{0.4}Fe_{0.6}PO_4$ | Monocrystal | 0.9 | 5 | 22 | 1.131 | 50% |
| Example 35 | $LiNi_{0.55}Co_{0.1}Mn_{0.35}O_2$ | 0.55 | 0.1 | Monocrystal | 2 | 11 | / | 0.8 | $Li_{0.994}MO_{0.00}Mn_{0.65}Fe_{0.35}P_{0.999}Si_{0.001}O_{3.999}F_{0.001}$ | Monocrystal | 2 | 18 | 12 | 0.948 | 50% |
| Example 36 | $LiNi_{0.55}Co_{0.1}Mn_{0.35}O_2$ | 0.55 | 0.1 | Monocrystal | 2 | 11 | / | 0.8 | $Li_{0.977}Mg_{0.001}Mn_{0.65}Fe_{0.34}Ti_{001}P_{0.999}N_{0.001}O_{3.999}F_{0.001}$ | Monocrystal | 2 | 18 | 12 | 0.948 | 50% |
| Example 37 | $LiNi_{0.55}Co_{0.1}Mn_{0.35}O_2$ | 0.55 | 0.1 | Monocrystal | 2 | 11 | / | 0.8 | $Li_{0.952}W_{0.001}Mn_{0.65}Fe_{0.35}P_{0.999}S_{0.001}O_{3.999}F_{0.001}$ | Monocrystal | 2 | 18 | 12 | 0.948 | 50% |
| Comparative example 1 | $LiNi_{0.55}Co_{0.1}Mn_{0.35}O_2$ | 0.55 | 0.1 | Monocrystal | 0.5 | 5 | / | 1.3 | $LiMn_{0.4}Fe_{0.6}PO_4$ | Monocrystal | 2 | 18 | 8 | 1.705 | 50% |
| Comparative example 2 | $LiNi_{0.55}Co_{0.1}Mn_{0.35}O_2$ | 0.55 | 0.1 | Monocrystal | 5 | 11 | / | 0.8 | $LiMn_{0.4}Fe_{0.6}PO_4$ | Monocrystal | 0.5 | 15 | 12 | 0.905 | 50% |

**Test methods**

(1) Tests of a crystal type and a particle size of primary particles:

Unless otherwise specified, in this application, the term "monocrystalline/quasi-monocrystalline particle" refers to a single particle (that is, a primary particle) and/or an agglomerated particle, where the agglomerated particle is a particle formed by agglomeration of no more than 100 (particularly, about 5 to 50) primary particles with an average particle size ranging from 50 to 10000 nm.

Unless otherwise specified, in this application, the terms "secondary particle" and "polycrystalline material particle" generally have similar meanings, and indicate a particle formed by agglomeration of more than 100 primary particles with an average particle size ranging from 50 to 800 nm.

The positive electrode active materials were tested using a scanning electron microscope. A sample and a magnification were adjusted such that there were more than 10 agglomerated particles in the field of view. A quantity of primary particles forming each agglomerated particle was measured, and sizes of the primary particles in a length direction were measured with a ruler and recorded as particle sizes. The particle sizes of the primary particles in each agglomerated particle were sorted in descending order. 1/10 of data with a maximum particle size and 1/10 of data with a minimum particle size were removed, and the remaining particle size data was averaged as a particle size of the primary particles. If quantities and average particle sizes of primary particles in more than 50% (including 50%) of agglomerated particles satisfied the definition of "polycrystalline material particle", the positive electrode active material was determined as a polycrystalline material; otherwise, the positive electrode active material was determined as a monocrystalline or quasi-monocrystalline material.

An average particle size of the primary particles of the polycrystalline material was recorded as the particle size of the primary particles.

(2) Test of a particle size distribution:

$D_v50$ particle sizes and $D_v99$ particle sizes of monocrystalline particles or quasi-monocrystalline particles and secondary particles were measured according to the method in the national standard GB/T 19077-2016 "Particle size distribution laser diffraction method", where deionized water was used as a solvent, and ultrasonic treatment was performed for 5 minutes before a test.

(3) Test of a BET specific surface area:

A BET specific surface area of powder was measured in a constant temperature environment of 25°C according to the method in the national standard GB/T 19587-2004 "Determination of the specific surface area of solids by gas adsorption using the BET method", where before a test, the powder was placed in a vacuum oven and dried at 200°C for 2 h or more, and based on a required amount, more than 20 g of the powder was weighed.

(4) Tests of thicknesses of a positive electrode plate in a battery fully-charged state and a battery fully-discharged state:

A battery was charged to 4.2 V at a current of 1/3C, then, charged to a current less than or equal to 0.05 mA at a constant voltage of 4.2 V, and allowed to stand for 5 minutes. Then, the battery was disassembled, a positive electrode plate was taken from the battery, rinsed with DMC for 5 times, and dried in an oven at 60°C for 2 hours, then thicknesses of upper, middle and lower regions of the positive electrode plate were obtained with a ten-thousandth micrometer, where 30 points were taken in each region, and a total of 90 points were taken, and an average value of the thicknesses was recorded as a thickness of the positive electrode plate in a fully-charged state. The foregoing battery was discharged to 2.5 V at a current of 1/3C, and then disassembled. The remaining operations were the same as above. A thickness of the positive electrode plate in a fully-discharged state was measured.

(5) Test of a gram capacity of a positive electrode active material:

A battery was allowed to stand for 2 hours in a constant temperature environment of 25°C, charged from 2.8 V to 4.2 V at 1/3C, then charged to a current less than or equal to 0.05 mA at a constant voltage of 4.2 V, allowed to stand for 5 minutes, and then discharged to 2.8 V at 1C. A discharge capacity of the battery was recorded, and a gram capacity of a positive electrode active material in the battery was obtained by dividing the discharge capacity of the battery by a mass of the positive electrode active material.

(6) Test of an energy density of a battery:

A battery was allowed to stand in a constant temperature environment of 25°C for 2 hours, charged from 2.8 V to 4.2 V at 1/3C, then charged to a current less than or equal to 0.05 mA at a constant voltage of 4.2 V, allowed to stand for 5 minutes, and then discharged to 2.5 V at a current of 1/3C, where a discharge capacity at this time was a battery capacity. During discharge, a battery voltage corresponding to the 50% SOC was a nominal voltage of the battery. A mass of a battery core was weighed using a balance with an accuracy of 0.1 g. An energy density of the battery was calculated according to the following formula:

$$\text{Energy density of a battery} = \text{Battery capacity} \times \text{nominal voltage}/$$

$$\text{mass of a battery core}.$$

(7) Test of a cycle life:

A battery was charged to 4.25 to 4.3 V from 2.5 V at 0.5C in a constant temperature environment of 25°C, then charged to a current less than or equal to 0.05 mA at a constant voltage of 4.25 to 4.3 V, allowed to stand for 5 minutes, and then discharged to 2.5 V at 0.5C. A discharge capacity of a first cycle of the battery was recorded as $D_1$. The foregoing operations were repeated, and a discharge capacity of each cycle was recorded as $D_n$ (n=2, 3, ...). A state of health (SOH) of the battery core was calculated according to the following formula, and a quantity n of cycles when the SOH fell to 80% was recorded:

$$\text{SOH of a battery core} = 100\% \times D_n/D_3.$$

(8) Test of a low-temperature discharge capacity retention rate:

In a constant temperature environment of 25°C, a battery was allowed to stand for 30 minutes, discharged to a lower cut-off voltage of 2.5 V at a constant current of 0.33C, allowed to stand for 5 minutes, charged to an upper cut-off voltage of 4.2 V at the constant current of 0.33C, then charged to a current less than 0.05C at a constant voltage, allowed to stand for 5 minutes, and discharged to the lower cut-off voltage of 2.5 V at the constant current of 0.33C, and a discharge capacity at this time was recorded as an initial discharge capacity $C_0$.
The battery was operated once at -20°C according to the foregoing process, and a discharge capacity $C_n$ was recorded. A discharge capacity retention rate of the battery at a low temperature of -20°C was calculated according to the following formula:

$$\text{Low} - \text{temperature discharge capacity retention rate} = 100\% \times C_n/C_0.$$

(9) Test of high-temperature storage performance at 60°C:

In a constant-temperature environment of 60°C, a battery was charged from 2.5 V to 4.25 to 4.3 V at 0.5C, then charged to a current less than or equal to 0.05 mA at a constant voltage of 4.25 to 4.3 V, and discharged to 2.5 V at 0.5C, and a discharge capacity D0 was recorded. Then, the battery was charged to a current less than or equal to 0.05 mA at a constant voltage of 4.25 to 4.3 V, and allowed to stand for 360 days. During the standing, three cycles were consecutively performed every 30 days. In each cycle, the battery was first discharged to 2.5 V at 0.5C, and then charged to the current less than or equal to 0.05 mA at the constant voltage of 4.25 to 4.3 V. A discharge capacity of a third cycle was recorded as Dn (n=1, 2, 3, ...), where n represents an nth 30 days of the standing. A value obtained by dividing Dn by D0 was used as an SOH of a battery core after nth 30-day high-temperature storage, and a quantity of days of high-temperature storage for the SOH to fell to 80% was recorded.
Results of the foregoing tests are shown in Tables 2 and 3.

Table 2: Cycle life test results of Examples 1 to 37 and Comparative examples 1 and 2

| | Cycle life (cycles) |
|---|---|
| Example 1 | 2341 |
| Example 2 | 1896 |

(continued)

|  | Cycle life (cycles) |
|---|---|
| Example 3 | 1919 |
| Example 4 | 1622 |
| Example 5 | 1832 |
| Example 6 | 2411 |
| Example 7 | 1943 |
| Example 8 | 1966 |
| Example 9 | 1955 |
| Example 10 | 1678 |
| Example 11 | 1865 |
| Example 12 | 1244 |
| Example 13 | 1970 |
| Example 14 | 1879 |
| Example 15 | 2333 |
| Example 16 | 1422 |
| Example 17 | 1631 |
| Example 18 | 1650 |
| Example 19 | 1690 |
| Example 20 | 1059 |
| Example 21 | 1158 |
| Example 22 | 1194 |
| Example 23 | 1404 |
| Example 24 | 1730 |
| Example 25 | 2154 |
| Example 26 | 2106 |
| Example 27 | 1654 |
| Example 28 | 1845 |
| Example 29 | 1733 |
| Example 30 | 1458 |
| Example 31 | 1569 |
| Example 32 | 1432 |
| Example 33 | 1765 |
| Example 34 | 1357 |
| Example 35 | 2455 |
| Example 36 | 2563 |
| Example 37 | 2477 |
| Comparative example 1 | 798 |
| Comparative example 2 | 876 |

It can be seen from Table 2 that, compared with Comparative examples 1 and 2, the cycle lives of the batteries in the examples of this application are significantly prolonged, and the cycle performance thereof is significantly improved.

Table 3: Test results of Examples 1 and 37

| | Gram capacity mAh/g | Energy density Wh/kg | Cycle life (cycles) | Low-temperature discharge capacity retention rate | High-temperature storage time at 60°C (days) |
|---|---|---|---|---|---|
| Example 1 | 163 | 500 | 2341 | 85% | 300 |
| Example 2 | 170 | 500 | 1896 | 87% | 240 |
| Example 3 | 162 | 500 | 1919 | 81% | 300 |
| Example 4 | 145 | 445 | 1622 | 83% | 240 |
| Example 5 | 180 | 552 | 1832 | 77% | 210 |
| Example 6 | 160 | 491 | 2411 | 88% | 180 |
| Example 7 | 172 | 529 | 1943 | 88% | 270 |
| Example 8 | 162 | 497 | 1966 | 82% | 330 |
| Example 9 | 171 | 526 | 1955 | 88% | 270 |
| Example 10 | 174 | 534 | 1678 | 85% | 240 |
| Example 11 | 170 | 523 | 1865 | 89% | 270 |
| Example 12 | 175 | 537 | 1244 | 82% | 180 |
| Example 13 | 172 | 529 | 1970 | 80% | 210 |
| Example 14 | 173 | 531 | 1879 | 66% | 180 |
| Example 15 | 153 | 469 | 2333 | 68% | 210 |
| Example 16 | 169 | 519 | 1422 | 75% | 150 |
| Example 17 | 162 | 496 | 1631 | 77% | 240 |
| Example 18 | 171 | 523 | 1650 | 75% | 210 |
| Example 19 | 160 | 492 | 1690 | 74% | 240 |
| Example 20 | 172 | 529 | 1059 | 72% | 210 |
| Example 21 | 169 | 518 | 1158 | 73% | 240 |
| Example 22 | 175 | 537 | 1194 | 80% | 120 |
| Example 23 | 172 | 529 | 1404 | 64% | 150 |
| Example 24 | 163 | 500 | 1730 | 74% | 240 |
| Example 25 | 149 | 458 | 2154 | 87% | 210 |
| Example 26 | 177 | 542 | 2106 | 75% | 330 |
| Example 27 | 135 | 414 | 1654 | 77% | 270 |
| Example 28 | 155 | 475 | 1845 | 79% | 300 |
| Example 29 | 172 | 529 | 1733 | 80% | 240 |
| Example 30 | 172 | 529 | 1458 | 77% | 180 |
| Example 31 | 162 | 496 | 1569 | 75% | 270 |
| Example 32 | 162 | 496 | 1432 | 72% | 270 |
| Example 33 | 170 | 500 | 1765 | 84% | 240 |
| Example 34 | 170 | 500 | 1357 | 81% | 180 |
| Example 35 | 167 | 511 | 2455 | 90% | 330 |
| Example 36 | 167 | 513 | 2563 | 91% | 330 |
| Example 37 | 169 | 517 | 2477 | 90% | 330 |

It can be seen from the results in Table 3 that:
Compared with Examples 19 and 24, the batteries of Examples 1 to 3, 7, 8, 25, 26, 28, and 33 of this application have longer cycle lives and higher low-temperature discharge capacity retention rates.

Compared with Example 27, the batteries of Examples 1 to 3, 7, 8, 25, 26, 28, and 33 of this application have higher gram capacities, higher energy densities, and longer cycle lives.

Compared with Examples 18, 29, and 30, the batteries of Examples 1 to 3, 7, 8, 25, 26, 28, and 33 of this application have longer cycle lives.

Compared with Examples 16, 17, 31, and 32, the batteries of Examples 1 to 3, 7, 8, 25, 26, 28, and 33 of this application have longer cycle lives.

Compared with Example 34, the batteries of Examples 1 to 3, 7, 8, 25, 26, 28, and 33 of this application have longer cycle lives and longer high-temperature storage time.

Compared with Example 20, the batteries of Examples 9 to 13, 22, and 23 of this application have longer cycle lives.

Compared with Example 21, the batteries of Examples 9 to 13, 22, and 23 of this application have higher gram capacities, higher energy densities, and longer cycle lives.

It should be noted that this application is not limited to the foregoing implementations. The foregoing implementations are merely examples, and implementations having substantially the same technical idea and the same effects within the scope of the technical solutions of this application are all included in the technical scope of this application. In addition, without departing from the scope of the subject matter of this application, various modifications that can be conceived by a person skilled in the art are applied to the implementations, and other manners constructed by combining some of the constituent elements of the implementations are also included in the scope of this application.

**Claims**

1. A positive electrode plate, comprising a first positive electrode active material and a second positive electrode active material, wherein

   the first positive electrode active material comprises a compound $Li_xNi_yCo_zM_kMe_pO_rE_s$, wherein
   M comprises one or two of Mn and Al;
   Me comprises one or more of Zr, Zn, Cu, Cr, Mg, Fe, V, Ti, Sr, Sb, Y, W, and Nb;
   E comprises one or more of N, F, S, and Cl; and
   $0.85 \leq x \leq 1.15$; $0 < y < 1$; $0 < z < 1$; $0 < k < 1$, and optionally, $0.05 \leq k \leq 0.4$; $0 \leq p \leq 0.1$; $1 \leq r \leq 2$, $0 \leq s \leq 1$, and $s+r \leq 2$;
   the second positive electrode active material comprises a compound $Li_aA_bMn_{1-c}B_cP_{1-d}R_dO_{4-n}D_n$, wherein
   A comprises one or more of Zn, Al, Na, K, Mg, Nb, Mo, and W;
   B comprises one or more of Zn, Al, Na, K, Mg, Mo, W, Ti, V, Zr, Fe, Ni, Co, Ga, Sn, Sb, Nb, and Ge, and optionally, comprises one or more of Fe, Ti, V, Ni, Co, and Mg;
   R comprises one or more of B, Si, N, S, F, Cl, and Br;
   D comprises one or more of S, F, Cl, and Br; and
   a ranges from 0.9 to 1.1, and optionally from 0.977 to 1; b ranges from 0 to 0.1, and optionally from 0 to 0.001; c ranges from 0.001 to 0.9, and optionally from 0.1 to 0.9 or 0.001 to 0.6; d ranges from 0 to 0.1, and optionally from 0 to 0.001 or 0.001 to 0.1; n ranges from 0 to 0.1, optionally from 0 to 0.001 or 0.001 to 0.1; and
   the positive electrode plate satisfies:

$$0.90 \leq \frac{m}{n} \leq 1.20$$

   wherein m represents a thickness of the positive electrode plate in a battery fully-charged state, and n represents a thickness of the positive electrode plate in a battery fully-discharged state.

2. The positive electrode plate according to claim 1, wherein

$$0.90 \leq \frac{m}{n} \leq 1.00.$$

3. The positive electrode plate according to claim 1 or 2, wherein in the first positive electrode active material, y ranges from 0.05 to 0.995, optionally from 0.05 to 0.95, and more optionally from 0.6 to 0.88.

4. The positive electrode plate according to any one of claims 1 to 3, wherein in the first positive electrode active material, z ranges from 0.005 to 0.9, optionally from 0.05 to 0.9, and more optionally from 0.05 to 0.35.

5. The positive electrode plate according to any one of claims 1 to 4, wherein a mass of the second positive electrode active material accounts for 20% to 80%, optionally 30% to 70%, and more optionally 40% to 65% of a total mass of the first positive electrode active material and the second positive electrode active material.

6. The positive electrode plate according to any one of claims 1 to 5, wherein the first positive electrode active material is a monocrystalline or quasi-monocrystalline material and satisfies:

   a $D_v50$ particle size of monocrystalline particles or quasi-monocrystalline particles ranges from 0.5 to 5 $\mu$m, and optionally from 1 to 4.1 $\mu$m, and/or
   a $D_v99$ particle size of the monocrystalline particles or the quasi-monocrystalline particles ranges from 2 to 18 $\mu$m, and optionally from 3 to 18 $\mu$m, and/or
   a BET specific surface area of the first positive electrode active material ranges from 0.2 to 1.8 $m^2/g$, and optionally from 0.4 to 1.2 $m^2/g$.

7. The positive electrode plate according to any one of claims 1 to 6, wherein the first positive electrode active material is a polycrystalline material and satisfies:

   a $D_v50$ particle size of secondary particles ranges from 5 to 15 $\mu$m, and optionally from 7 to 13 $\mu$m, and/or
   a $D_v99$ particle size of the secondary particles ranges from 2 to 33 $\mu$m, and optionally from 18 to 33 $\mu$m, or is greater than or equal to 2 $\mu$m and is less than 30 $\mu$m, and/or
   a particle size of primary particles ranges from 20 to 1500 nm, and optionally from 50 to 800 nm, and/or
   a BET specific surface area of the first positive electrode active material ranges from 0.4 to 1.5 $m^2/g$, and optionally from 0.6 to 1.3 $m^2/g$.

8. The positive electrode plate according to any one of claims 1 to 7, wherein the second positive electrode active material is a monocrystalline or quasi-monocrystalline material and satisfies:

   a $D_v50$ particle size of monocrystalline particles or quasi-monocrystalline particles ranges from 0.5 to 5 $\mu$m, and optionally from 0.8 to 4.2 $\mu$m, and/or
   a $D_v99$ particle size of the monocrystalline particles or the quasi-monocrystalline particles is greater than 2 $\mu$m and is less than or equal to 32 $\mu$m, and optionally is greater than 2 $\mu$m and is less than 30 $\mu$m, and/or
   a BET specific surface area of the second positive electrode active material ranges from 6 to 22 $m^2/g$, and optionally from 8 to 20 $m^2/g$.

9. The positive electrode plate according to any one of claims 1 to 8, wherein the first positive electrode active material comprises a core and a coating layer coating the core, wherein the core is made of the compound $Li_xNi_yCo_zM_{k-}Me_pO_rE_s$, and the coating layer comprises carbon; and optionally, a mass of the coating layer accounts for 1% to 2% of the mass of the first positive electrode active material.

10. The positive electrode plate according to any one of claims 1 to 9, wherein the second positive electrode active material comprises a core and a coating layer coating the core, wherein the core is the compound $Li_aA_bMn_{1-c}B_cP_{1-d}R_dO_{4-n}D_n$, and the coating layer comprises one or more of pyrophosphate, phosphate, and carbon.

11. A battery, comprising the positive electrode plate according to any one of claims 1 and 10.

12. an electrical device, comprising the positive electrode plate according to any one of claims 1 to 10 or the battery according to claim 11.

5

FIG. 1

5

53

52
52

51

FIG. 2

4    5    5

5    5

FIG. 3

FIG. 4

FIG. 5

FIG. 6

## INTERNATIONAL SEARCH REPORT

| International application No. |
|---|
| **PCT/CN2024/070771** |

### A. CLASSIFICATION OF SUBJECT MATTER

H01M 4/131(2010.01)i; H01M 10/04(2006.01)i

According to International Patent Classification (IPC) or to both national classification and IPC

### B. FIELDS SEARCHED

Minimum documentation searched (classification system followed by classification symbols)

IPC: H01M4/-, H01M10/-

Documentation searched other than minimum documentation to the extent that such documents are included in the fields searched

Electronic data base consulted during the international search (name of data base and, where practicable, search terms used)

CNTXT, ENTXTC, DWPI, CNKI: 正极, 极片, 活性, 锂, 锰, 镍, 钴, 磷, 单晶, 多晶, positive, electrode, active, Li, Mn, Ni, Co, P, single crystal, polycrystalline

### C. DOCUMENTS CONSIDERED TO BE RELEVANT

| Category* | Citation of document, with indication, where appropriate, of the relevant passages | Relevant to claim No. |
|---|---|---|
| X | CN 114730910 A (CONTEMPORARY AMPEREX TECHNOLOGY CO., LTD.) 08 July 2022 (2022-07-08) description, paragraphs 59, 75, and 99-114 | 1-12 |
| A | CN 106575755 A (SONY CORP.) 19 April 2017 (2017-04-19) claims 1-16 | 1-12 |
| A | CN 107958997 A (NINGDE AMPEREX TECHNOLOGY LTD.) 24 April 2018 (2018-04-24) claims 1-10 | 1-12 |
| A | CN 114520304 A (SAMSUNG ELECTRONICS CO., LTD.) 20 May 2022 (2022-05-20) claims 1-32 | 1-12 |
| A | CN 115732744 A (CONTEMPORARY AMPEREX TECHNOLOGY CO., LTD.) 03 March 2023 (2023-03-03) claims 1-20 | 1-12 |
| A | WO 2021217587 A1 (CONTEMPORARY AMPEREX TECHNOLOGY CO., LTD.) 04 November 2021 (2021-11-04) abstract | 1-12 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 March 2024** | **18 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/070771**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021217628 A1 (CONTEMPORARY AMPEREX TECHNOLOGY CO., LTD.) 04 November 2021 (2021-11-04) abstract | 1-12 |

Form PCT/ISA/210 (second sheet) (July 2022)

## INTERNATIONAL SEARCH REPORT
### Information on patent family members

International application No.

**PCT/CN2024/070771**

| Patent document cited in search report | | | Publication date (day/month/year) | Patent family member(s) | | | Publication date (day/month/year) |
|---|---|---|---|---|---|---|---|
| CN | 114730910 | A | 08 July 2022 | None | | | |
| CN | 106575755 | A | 19 April 2017 | KR | 20200105545 | A | 07 September 2020 |
| | | | | US | 2017207444 | A1 | 20 July 2017 |
| | | | | US | 10559810 | B2 | 11 February 2020 |
| | | | | KR | 20170038787 | A | 07 April 2017 |
| | | | | KR | 102334085 | B1 | 01 December 2021 |
| | | | | WO | 2016017077 | A1 | 04 February 2016 |
| | | | | JP | 2016033902 | A | 10 March 2016 |
| CN | 107958997 | A | 24 April 2018 | None | | | |
| CN | 114520304 | A | 20 May 2022 | EP | 4002512 | A1 | 25 May 2022 |
| | | | | KR | 20220069617 | A | 27 May 2022 |
| | | | | US | 2022166110 | A1 | 26 May 2022 |
| CN | 115732744 | A | 03 March 2023 | None | | | |
| WO | 2021217587 | A1 | 04 November 2021 | JP | 2023503699 | A | 31 January 2023 |
| | | | | ES | 2945476 | T3 | 03 July 2023 |
| | | | | PL | 3961769 | T3 | 26 June 2023 |
| | | | | EP | 3961769 | A1 | 02 March 2022 |
| | | | | EP | 3961769 | A4 | 13 July 2022 |
| | | | | EP | 3961769 | B1 | 19 April 2023 |
| | | | | US | 2022123287 | A1 | 21 April 2022 |
| | | | | HUE | 061901 | T2 | 28 August 2023 |
| | | | | KR | 20220095221 | A | 06 July 2022 |
| WO | 2021217628 | A1 | 04 November 2021 | KR | 20210134924 | A | 11 November 2021 |
| | | | | EP | 3926707 | A1 | 22 December 2021 |
| | | | | EP | 3926707 | A4 | 20 April 2022 |
| | | | | US | 2022052321 | A1 | 17 February 2022 |
| | | | | US | 11322739 | B2 | 03 May 2022 |
| | | | | JP | 2022527148 | A | 31 May 2022 |
| | | | | JP | 7234403 | B2 | 07 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310237435
- GB 190772016 T

- GB 195872004 T